# EUROPEAN PATENT SPECIFICATION

(11) **EP 1 602 710 B1**
(45) Date of publication and mention of the grant of the patent: **03.02.2016**
(21) Application number: 04716782.0
(22) Date of filing: 03.03.2004
(51) Int. Cl.: C10M 169/00, B62D 1/18, B62D 5/04, C10M 101/02, C10M 105/18, C10M 105/32, C10M 107/02, C10M 115/08, C10M 117/00, C10M 143/00, C10M 159/06, C10N 10/02, C10N 10/04, C10N 10/06, C10N 20/02, C10N 30/06, C10N 40/02, C10N 40/04, C10N 50/10

(54) **GREASE COMPOSITION FOR RESIN LUBRICATION AND ELECTRICALLY OPERATED POWER STEERING UNIT**
SCHMIERMITTELZUSAMMENSETZUNG FÜR DIE HARZSCHMIERUNG UND ELEKTRISCH BETRIEBENE SERVOLENKEINHEIT
COMPOSITION D'UNE GRAISSE DE GRAISSAGE DE RESINES ET DE DIRECTIONS ASSISTEES ELECTRIQUES

(30) Priority: 11.03.2003 JP 2003065534
(43) Date of publication of application: 07.12.2005
(73) Proprietor: NSK Ltd., Tokyo 141-8560 (JP); NSK Steering Systems Co., Ltd., Shinagawa-ku, Tokyo 141-8560 (JP)
(72) Inventor: MIYAJIMA, Hirotoshi, NSK Ltd., Fujisawa-shi, Kanagawa 251-8501 (JP); NAKATANI, Shinya, NSK Ltd., Fujisawa-shi, Kanagawa 251-8501 (JP); IWANO, Toshiyuki, NSK Steering Systems Co., Ltd., Maebashi-shi, Gunma 371-0853 (JP); NAKA, Michiharu, NSK Ltd., Fujisawa-shi, Kanagawa 251-8501 (JP)
(74) Representative: Grünecker Patent- und Rechtsanwälte PartG mbB
(86) International application number: PCT/JP2004/002634
(87) International publication number: WO 2004/081156

(56) References cited:
- EP-A1- 1 416 036
- EP-A1- 1 559 773
- EP-A1- 1 609 694
- JP-A- 2 194 095
- JP-A- 7 041 784
- JP-A- 9 194 867
- JP-A- 60 011 591
- JP-A- 60 031 598
- JP-A- 2002 227 854
- JP-A- 2002 308 125
- JP-A- 2002 371 290
- JP-A- 2003 003 185
- JP-A- 2003 054 421
- US-A- 5 607 906
- US-B1- 6 444 621

## Description

### <TECHNICAL FIELD>

The present invention relates to a grease composition for resin lubrication, to be preferably used for the lubrication between a resin member and a metal member, as in a power steering apparatus of an automobile, a resin-coated spline, or the like.

### <BACKGROUND ART>

In recent years, members made of resins (such as polyamide) have come to be often used in place of various members made of metals for the purpose of reducing the weight of an automobile or the like. For example, for the speed reduction mechanism unit of the electric power steering apparatus of an automobile, a worm wheel gear made of a resin and a worm gear made of a steel are used. For the lubrication between the members made of a resin, and between the member made of a resin and the member made of metal, generally, a grease composition is used. For example, a grease composition for resin lubrication, containing a fatty acid containing a hydroxyl group or a fatty acid ester of polyhydric alcohol (see, Japanese Patent Unexamined Publication No. JP-A-8-209167) is known. When this grease composition is used for the speed reduction mechanism unit of the electric power steering apparatus of an automobile, the fluctuations in torque are suppressed even after long term use, so that, advantageously, even long-hour driving causes no sense of discomfort in wheel handling. However, when this grease composition for resin lubrication is applied to an electric power steering apparatus of a large automobile, the lubrication site becomes highly loaded, and the use conditions become extreme. This causes problems such as jamming upon slow steering due to an increase in static friction force, and shortening of the fatigue life.

As the grease compositions which have solved such problems, there are proposed a grease composition for resin lubrication having a polyethylene wax having an average molecular weight of 900 to 10000 in an amount of 0.5 to 40mass% (see, Japanese Patent Unexamined Publication No. JP-A-9-194867), a grease composition for resin lubrication using a synthetic hydrocarbon oil as a base oil, using an urea compound as a thickener, and containing a montan wax (see, Japanese Patent Unexamined Publication No. JP-A-2002-371290), a grease composition for resin lubrication containing a polyethylene oxide type wax in an amount of 0.1 to 30 mass% (see, Japanese Patent Unexamined Publication No. JP-A-2003-3185) and the like. However, these grease compositions for resin lubrication each have an effect of improving the wear resistance of a speed reduction gear including a worm made of metal and a warm wheel made of a synthetic resin. However, a further improvement of the sliding lubrication between the resin and the steel is demanded from the viewpoints of the improvement of the vehicle responsiveness and the durability.

US 5 607 906 A, JP 60 011591 A, EP 1 559 773 A1, EP 1 609 694 A1, EP 1 416 036 A1, JP 2002 371290 A, JP 9 194867 A, JP 2003 003185 A, JP 2002 308125 A, JP 60 031598 A, JP 2 194095 A, JP 7 041784 A disclose grease compositions comprising base oil, a thickener and a wax component.

JP 2003 054421 A discloses an expandable shaft for steering of motor vehicles, comprising polytetrafluoroethylene skin layer formed on both sides or at joint portion surface of male shaft and female shaft.

The invention has been made under such circumstances. It is therefore an object thereof to provide a grease composition for resin lubrication capable of keeping good the sliding lubrication between the resin member and the metal member over the long term..

### <DISCLOSURE OF THE INVENTION>

In order to achieve the foregoing objects, the invention provides following grease composition for resin lubrication and electric power steering apparatus as defined in claim 1 or 2.

An electric power steering apparatus for transferring an auxiliary power by an electric motor to a steering mechanism of a vehicle via a speed reduction gear mechanism, characterized in that a driven gear of the speed reduction gear mechanism includes a resin portion made of a resin composition, and having gear teeth formed on its outer peripheral surface, integrally provided around the outer periphery of a core tube made of metal, and the driving gear is made of metal, and comprising between the driven gear and the driving gear the grease composition according to claim 1 or 2.

The electric power steering apparatus according to the above item characterized in that the tooth surface roughness of the driving gear is 0.008 to 0.15 µm in terms of the arithmetic average roughness (Ra); and the driving gear has been subjected to a palsonite treatment.

A telescopic shaft for vehicle steering, to be incorporated into a steering shaft of a vehicle, having male shaft and a female shaft unrotatably and slidably fitted to each other, characterized in that a resin film is formed on the fitted portion surface of either one or both of the male shaft and the female shaft and comprising the grease composition according to the above items between the male shaft and the female shaft, and the wax mixture has been mixed in the grease composition in an amount of 5 to 10 mass% based on the total amount of the grease.

The telescopic shaft for vehicle steering according to the item (15), characterized in that as a base oil, a mineral oil or a synthetic hydrocarbon oil is contained in an amount of 70 mass% or more based on the total amount of the base oil, and the base oil kinematic viscosity is 15 to 200 mm²/s at 40 °C, and the worked penetration is 220 to 340.

### <BRIEF DESCRIPTION OF THE DRAWINGS>

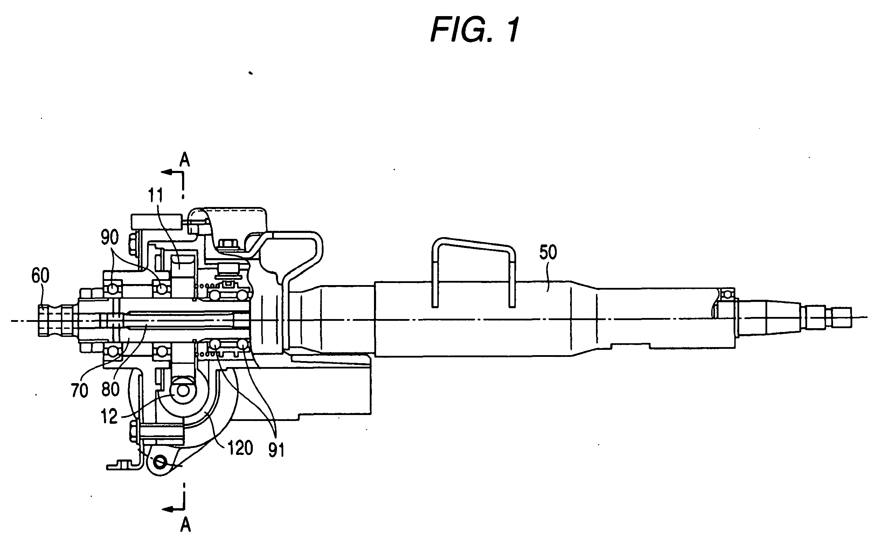

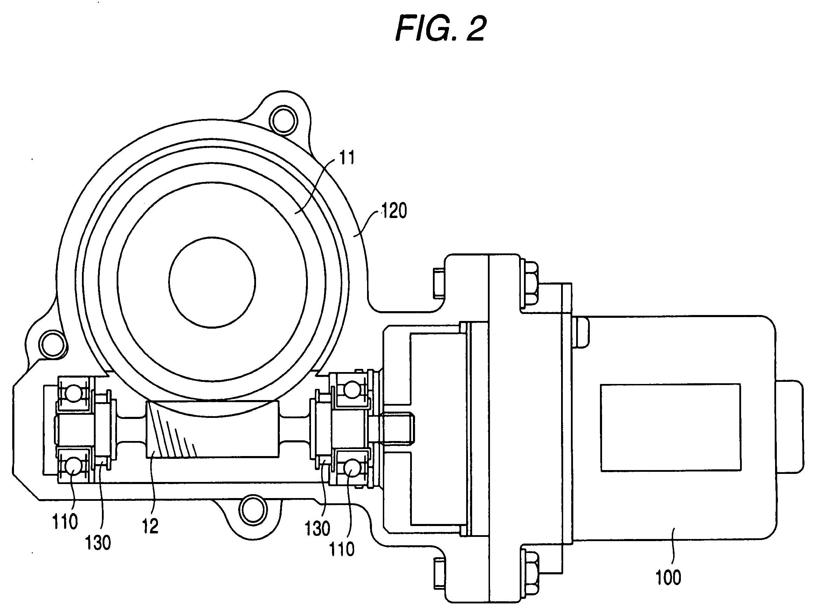

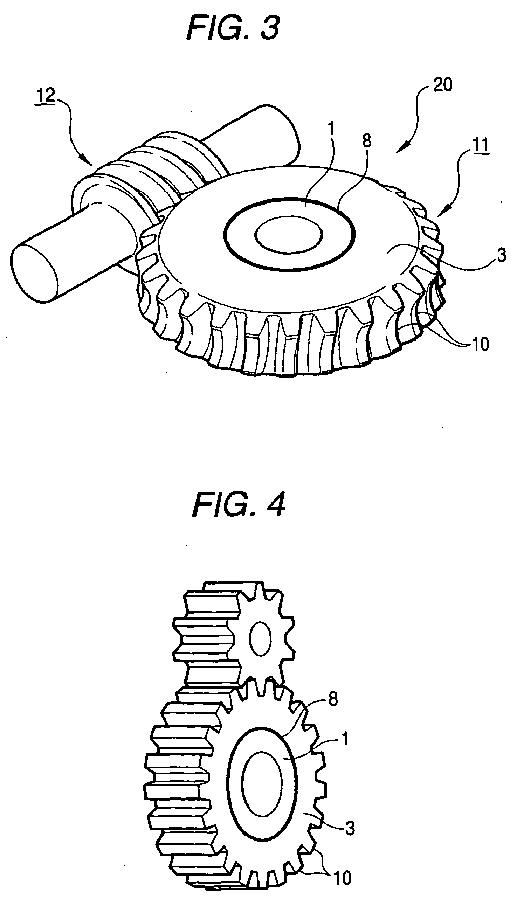

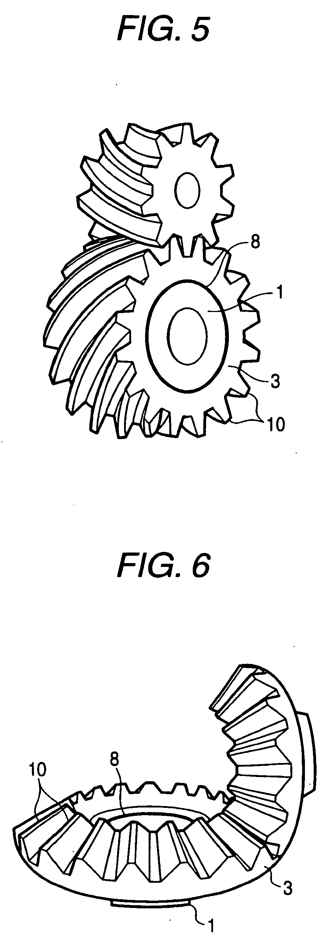

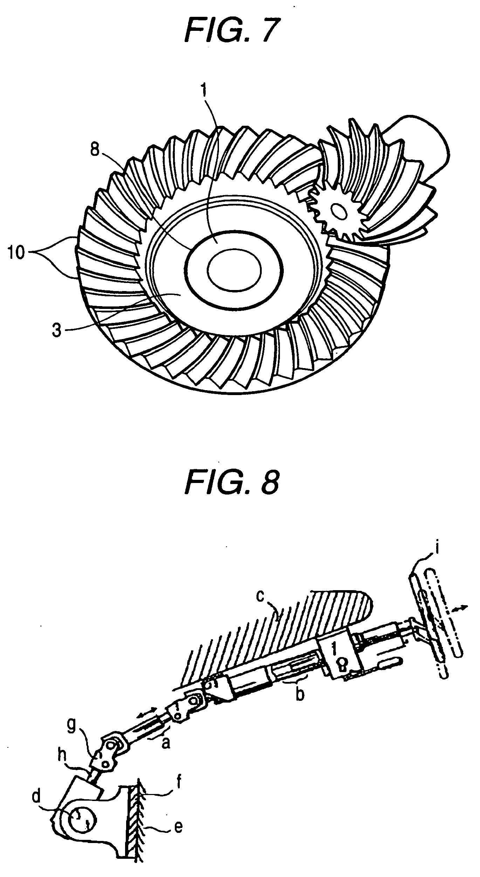

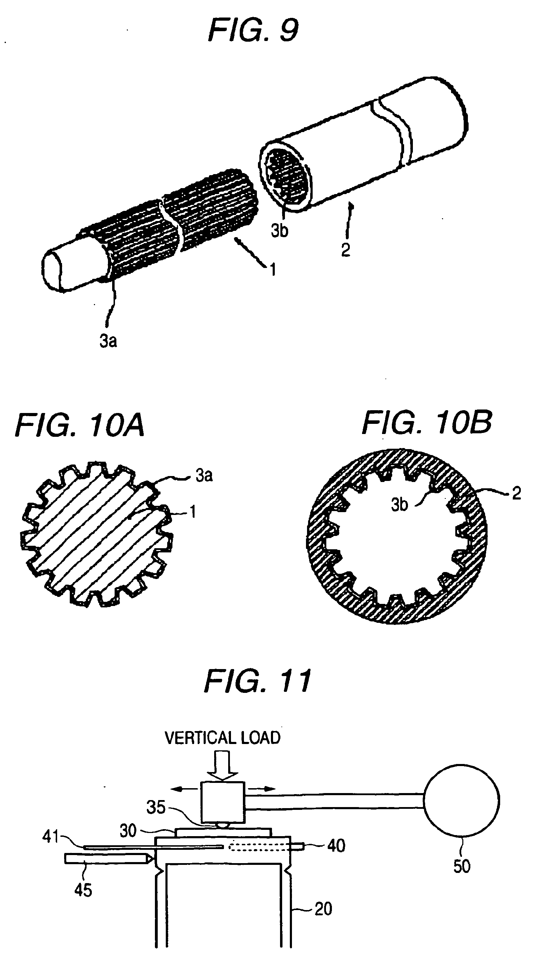

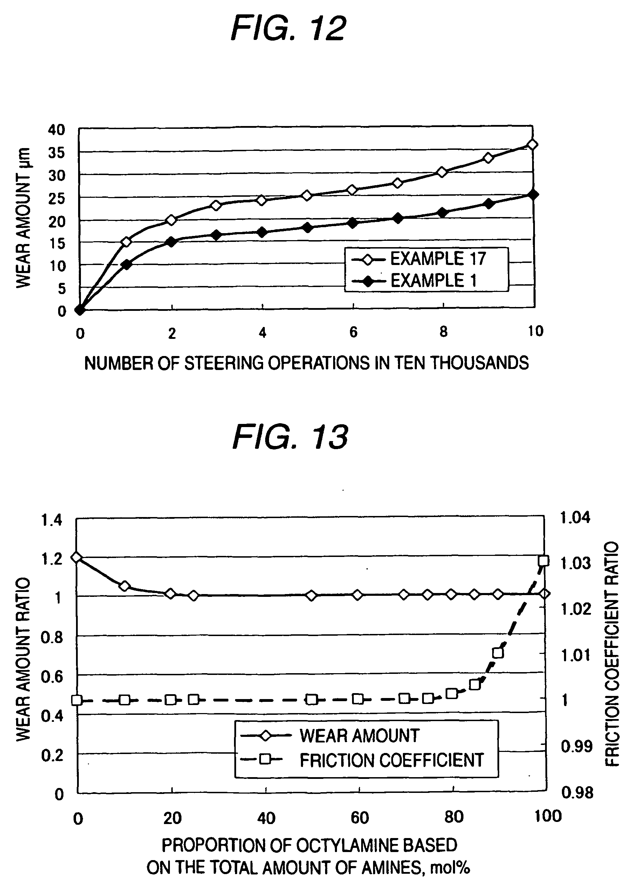

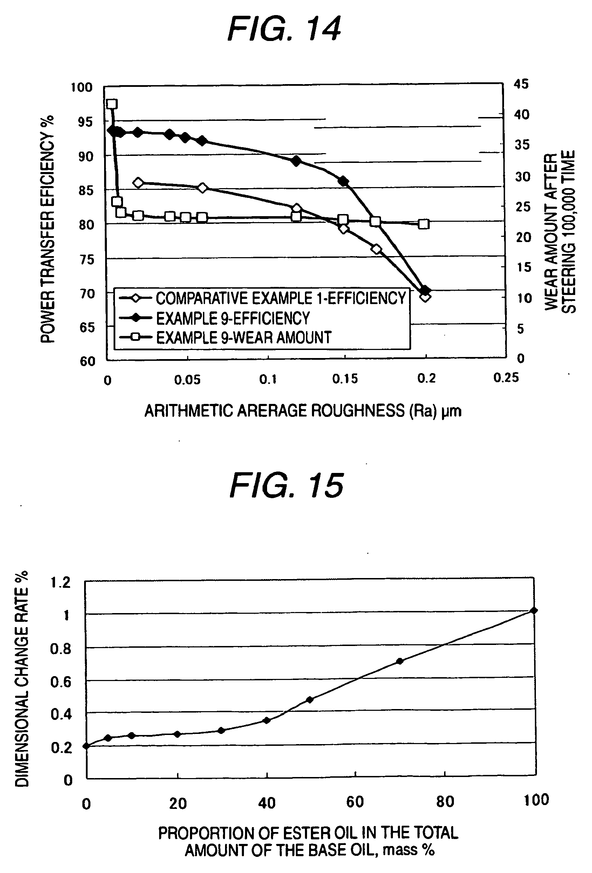

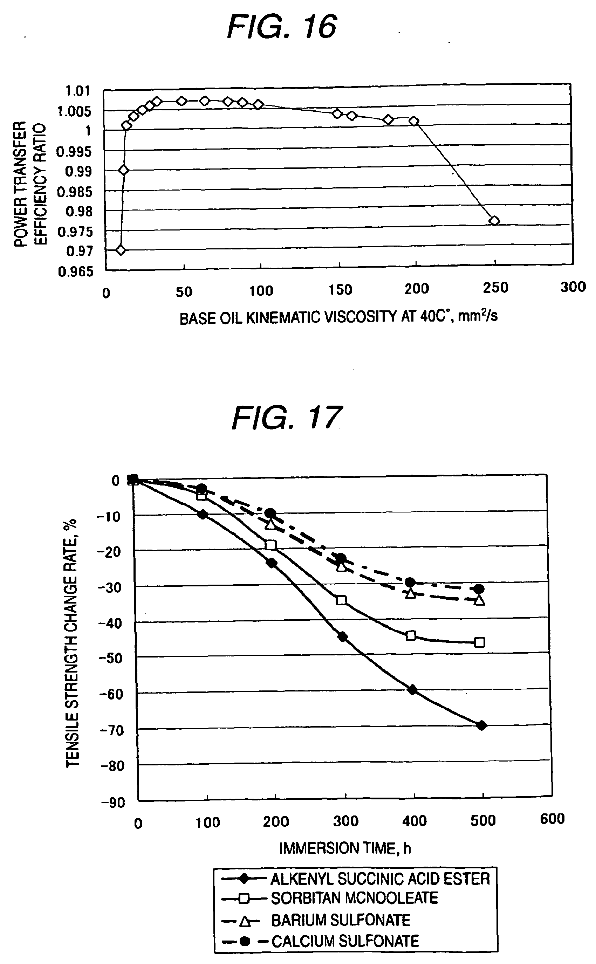

FIG. 1 is a block diagram partially in cross section showing one example of a power steering apparatus; FIG. 2 is a cross-sectional view along A-A of FIG. 1, which is a schematic block diagram showing the periphery of the joining portion between an electric motor and a speed reduction gear; FIG. 3 is a perspective view showing one example of the speed reduction gear (cylindrical worm gear); FIG. 4 is a perspective view showing another example of the speed reduction gear (spur gear); FIG. 5 is a perspective view showing a still other example of the speed reduction gear (helical gear); FIG. 6 is a perspective view showing a still further example of the speed reduction gear (bevel gear); FIG. 7 is a perspective view showing a further example of the speed reduction gear (hypoid gear) ; FIG. 8 is a side view of a steering mechanism unit of a general automobile; FIG. 9 is an exploded perspective view showing one example of a telescopic shaft for vehicle steering; FIG. 10A is a transverse sectional view of a male spline shaft of the telescopic shaft for vehicle steering shown in FIG. 8, and FIG. 10B is a transverse sectional view of a female spline shaft of the same telescopic shaft; FIG. 11 is a schematic view showing a reciprocating kinetic friction wear test machine used in Examples; FIG. 12 is a graph showing the changes with time in wear amount in Examples 1 and 17; FIG. 13 is a graph showing the relationship between the proportion of octyl amine in diurea and the wear amount ratio; FIG. 14 is a graph showing the relationship between the arithmetic average surface roughness (Ra) of the worm tooth surface and the power transfer efficiency; FIG. 15 is a graph showing the relationship between the proportion of an ester oil in a base oil and the dimensional change rate of a resin: FIG. 16 is a graph showing the relationship between the base oil kinematic viscosity and the power transfer efficiency ratio; and FIG. 17 is a graph showing the relationship between the immersion time and the tensile strength change rate.

Whereas, a reference number 1 in the diagrams shows a core tube; 3, a resin portion; 8, an adhesion layer; 10, a gear tooth; 11, a worm wheel; 12, a worm; 20, a speed reduction gear; 50, a steering column; 70, a steering shaft; 80, a torsion bar; 90, a bearing; 91, a bearing; 100, an electric motor; 110, a rolling bearing; 120, a housing; 130, a damper; 201, a male spline shaft (male shaft); 202, a female spline shaft (female shaft); and 203a and 203b, a resin film.

### <BEST MODE FOR CARRYING OUT THE INVENTION>

Hereinafter, the present invention will be described in details.

### (Grease composition for resin lubrication)

A grease composition for resin lubrication of the invention contains at lease one of a nonpolar wax and a polar wax. The polar wax adsorbs on a resin member and a metal member, and the nonpolar wax provides the bound effect between polarities, so that the lubricity between the resin member and the metal member is improved. This can improve the power transferability and the durability.

The nonpolar wax refers to a wax not having a polar group in the wax components. There are a petroleum wax extracted upon petroleum refining, a Fischer-Tropsch wax synthesized by allowing carbon monoxide to react with hydrogen, a polyethylene wax produced by polymerization of ethylene or thermal cracking of polyethylene, a fluororesin such as polytetrafluoroethylene, and the like. A polyethylene wax is used in the present invention.

The polar wax is a wax having a polar group in the wax components. There are solidsubstancesat ordinary temperatures such as a montanic acid wax obtainable from brown coal or lignite, or a wax of a montanic acid derivative, a fatty acid ester, a fatty acid amide, and ketone-amines, oxidized waxes obtained by oxidizing waxes, and the like. A montan wax is used in the present invention.

The nonpolar wax and the polar wax exhibit favorable results in sliding lubrication between the resin member and the metal member even when used each alone. However, when they are used in combination, the foregoing respective effects are correlatively combined with each other, resulting in further enhanced effects.

The content of the wax in the grease composition for resin lubrication of the invention is 5 to 20 mass% both when they are used alone and when used in combination. When the content is less than 0.5 mass%, no effect is produced. Whereas, when the content exceeds 30 mass%, the grease is excessively hardened, so that sufficient lubricating effects cannot be produced.

Whereas, in the grease composition for resin lubrication of the invention, the thickener is preferably a diurea compound or a metallic complex soap.

The urea compound is preferably the one represented by the following general formula (I):

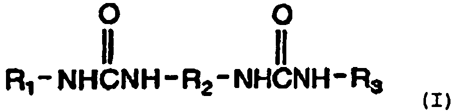

Incidentally, R₂ in the formula (I) represents an aromatic type hydrocarbon group having 6 to 15 carbon atoms, and R₁ and R₃ are each a straight chain alkyl group having 8 to 20 carbon atoms, and may be mutually the same or different.

The diurea compound represented by the general formula (I) can be obtained by allowing a total of 2 mol of monoamine containing R₁ or R₃ in the skeleton to react with every 1 mol of diisocyanate containing R₂ in the skeleton in a base oil. As the diisocyanate containing R₂ in the skeleton, diphenylmethane diisocyanate, tolylene diisocyanate, xylylene diisocyanate, biphenylene diisocyanate, or dimethyldiphenylene diisocyanate, or an alkyl-substituted form thereof, or the like can be preferably used. Whereas, as a monoamine containing a hydrocarbon group in the skeleton as R₁ or R₃, a straight chain amine such as octylamine, nonylamine, decylaniline, undecylamine, tridecylamine, tetradecylamine, pentadecylamine, octadecylamine, hexylamine, heptylamine, ethylhexylamine, dodecylamine, nonadecylamine, or eicodecylamine can be preferably used.

Whereas, the metallic complex soap is the one synthesized from a metal source containing a metal such as lithium, sodium, barium, or aluminum in the first, second, and 13th group of the periodic table, an aliphaticmonocarboxylic acidhaving 12 to 24 carbon atoms, which contains at least one hydroxyl group, and an aliphatic dicarboxylic acid having 2 to 12 carbon atoms. As the hydroxy aliphatic monocarboxylic acid, mention may be made of 9-hydroxystearic acid, 10-hydroxystearic acid, 12-hydroxystearic acid, 9,10-dihydroxystearic acid, or the like. Preferred is 12-hydroxystearic acid. As the aliphatic dicarboxylic acid, mention may be made of oxalic acid, malonic acid, succinic acid, glutaric acid, adipic acid, pimelic acid, suberic acid, azelaic acid, sebacic acid, dodecanedioic acid, or the like. Preferred is azelaic acid.

Incidentally, it is important that the proportion of the aliphatic dicarboxylic acid in the aliphatic monocarboxylic acid having 12 to 24 carbon atoms and the aliphatic dicarboxylic acid having 2 to 12 carbon atoms is 20 to 40 mass%. When the proportion is less than 20 mass%, or exceeds 40 mass%, it is not possible to obtain a thermally stable complex grease.

Whereas, in the diurea compound represented by the general formula (I), it is preferable that R₁ and R₃ are each n-octylamine or a straight chain aliphatic amine having 12 to 20 carbon atoms, and that the mole ratio of the n-octylamine and the straight chain aliphatic amine having 12 to 20 carbon atoms is 1 : 4 to 4 : 1.

The amount of the thickener is preferably 3 to 40 mass% based on the total amount of the grease composition for resin lubrication. In view of the worked penetration, the amount of the thickener is preferably 5 to 30 mass%, more preferably 5 to 20 mass%, further preferably 5 to 15 mass%, and in particular preferably 7 to 13 mass% for the urea compound. Whereas, the amount is preferably 10 to 30 mass% for the metallic soap type. When the amount is less than 3 mass%, it becomes difficult to keep the grease state. Whereas, when the amount exceeds 40mass%, the grease is excessively hardened, so that sufficient lubricating effects cannot be produced. The consistency is in the range of 220 to 395, and preferably in the range of 265 to 350 in terms of the worked penetration. When it is smaller than 220, the grease is excessively hardened, so that sufficient lubricating effects cannot be expected. Whereas, when the consistency is larger than 395, the grease may leak from the applied site.

Whereas, in the grease composition for resin lubrication of the invention, as the base oil, at least one of dialkyl diphenyl ether, an ester type synthetic oil, poly α-olefin oil, and a highly refined mineral oil is preferably used. Dialkyl diphenyl ether is represented by following general formula (II):

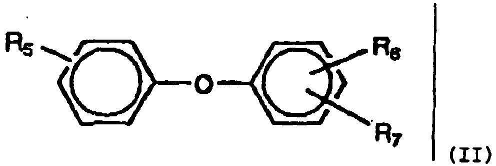

Incidentally, in the formula (II), R₅, R₆, and R₇ are the same or different groups. One of these is a hydrogen atom, and the other two are each an alkyl group, a straight chain alkyl group preferably having 8 to 20 carbon atoms, and further preferably having 12 to 14 carbon atoms.

As the ester type synthetic oils, mention may be made of diesters such as di-2-ethylhexyl sebacate, dioctyl adipate, diisodecyl adipate, and ditridecyl adipate, polyol esters such as trimethylolpropane caprylate and pentaerythritol-2-ethylhexanoate, and aromatic ester oils such as trimellitic acid ester, trioctyl trimellitate, tridecyl trimellitate, and tetraoctyl pyromellitate.

The poly α-olefin oil is represented by the following general formula (III):

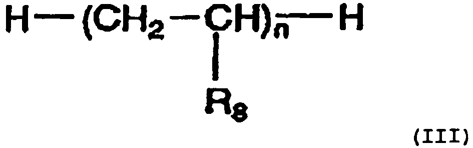

Incidentally, R₈ in the formula (III) is an alkyl group. Two or more different al kyl groups may be included in the same molecule. However, preferred is a n-octyl group. Whereas, n is preferably an integer of 3 to 8.

A highly refined mineral oil to be preferably used is the one obtained from refining by appropriately combining vacuum distillation, lubricant deasphalting, solvent extraction, hydrocracking, solvent dewaxing, sulfuric acid cleaning, clay refining, hydrogenation refining, and the like, and having aromatic type components by the ring analysis in an amount of less than 1 mass%, and paraffinic type components by the ring analysis in an amount of 90 mass% or more, and a viscosity index of 120 or more.

Out of the foregoing base oils, a synthetic hydrocarbon oil or a highly refined mineral oil is preferred, and the one containing a synthetic hydrocarbon oil as a main component is in particular preferred, in view of various resin suitabilites.

Whereas, for example, in order to improve the wettability with a resin, to the base oil, a small amount of a lubricating oil having polarity may be mixed for use. In that case, when the amount of the polar oil used is 30 mass% or less based on the total amount of the base oil, swelling and modification of the resin are almost negligible.

Whereas, the base oil preferably has a kinematic viscosity at 40 °C of 15 to 200 mm²/s. Inviewof the lubricating characteristics, the evaporation characteristics, and the low temperature fluidity, the kinematic viscosity at 40 °C is preferably 20 to 150 mm²/s. It is more preferably 30 to 100 mm²/s, and the optimum value thereof is 35 to 65 mm²/s. For example, SHFseries from Mobil Chemical Products International, Inc., can be preferably used.

To the grease composition for resin lubrication of the invention, if required, various additives may be mixed in order to further improve various performances. For example, extreme pressure agents including organic zinc compounds such as zinc dialkyl dithiophosphate, zinc diaryl dithiophosphate, and zinc dialkyl dithiocarbamate, organic molybdenum compounds such as molybdenum dialkyl dithiophosphate, molybdenum diaryl dithiophosphate, and molybdenum dialkyl dithiocarbamate, thiocarbamine compounds, phosphates, phosphites, and the like; antioxidants including amine type ones such as phenyl-1-naphthylamine, phenol type ones such as 2,6-di-tert-dibutylphenol, sulfur type ones, dithiophosphate, and the like; rust inhibitors including organic sulfonic acid salts of an alkali metal, alkaline-earth metal, and the like, alkyl or alkenyl succinic acid derivatives such as alkyl or alkenyl succinic acid esters, partial esters of polyhydric alcohols such as sorbitan monooleate, and the like (out of these, sulfonic acid metal salts and sulfonic acid calcium salts are preferred) ; oiliness improvers such as fatty acids, animal and vegetable oils, and montanic acid wax; and metal deactivators such as benzotriazole may be added. These additives may be used alone, or in combination.

Whereas, the amount of the additives to be added has no particular restriction, and is appropriately set so long as it is such that the effects of the additives are expressed, and such that the objects of the invention are not impaired. For example, the amount of the rust inhibitor to be added is preferably 0.3 to 4.0 mass%, and more preferably 0.3 to 3.0 mass% based on the total amount of the grease. When the amount is less than 0.3 mass%, a sufficient rust inhibiting ability cannot be exerted. When the amount of the rust inhibitor mixed is larger than 4.0 mass%, no matter how small the effects of the rust inhibitor on the resin material are, the effects on the resin unfavorably increases with an increase in the mixing amount.

In the electric power steering apparatus of an automobile, in order to generate an assist torque, a motor is driven, which operates a speed reduction gear. This causes self heat generation due to the engagement between a worm made of a steel and a worm wheel made of a polyamide synthetic resin which are components of the speed reduction gear. For example, when the polyamide synthetic resin is PA6GF30, the tooth surface temperature at an outside air temperature of 25 °C is about 60 °C. The speed reduction gear is set, for example, as shown in Japanese Patent Unexamined Publication No. JP-A-7-21522, so as to prevent the center distance from changing with the atmospheric temperature. However, in engagement of the gear, the polyamide synthetic resin with a large linear expansion coefficient intensively increases in temperature, and hence the center distance of the speed reduction gear shrinks, resulting in a heavier operating torque. In the uncontrolled (straight minute steering angle) range of the electric power steering apparatus, the weight of the operating torque results in the friction upon wheel steering. For this reason, when assist control is continued, the vehicle ceases to respond with slight steering.

However, in the case where the grease composition for resin lubrication of the invention is applied to the speed reduction gear, the coefficient of friction of the lubricating grease composition can be furthermore reduced than ever at room temperature or higher, and hence the operating torque does not become heavier even when the shrinkage of the center distance due to the self heat generation of the speed reduction gear occurs. Accordingly, it is possible to obtain a given vehicle responsiveness not dependent upon the assist conditions.

Whereas, the kind of the resin to be lubricated by the grease composition for resin lubrication of the invention is not limited to a polyamide resin (nylon). For example, the grease composition is also effective for a polyamideimide resin, a polyacetal resin, a polybutylene terephthalate resin, a polyether ether ketone resin, a polyphenylene sulfide resin, and the like.

The grease composition for resin lubrication of the invention is configured as described above, and also has the effects as described above. It is suitable for the lubrication of an electric power steering apparatus, and an electric tilt / telescopic, and a resin-coated spline, and the lubrication of the male shaft and the female shaft of the telescopic shaft for vehicle steering. Below, an example in which the grease composition has been applied to the power steering apparatus of an automobile and the telescopic shaft for vehicle steering.

### (Electric power steering)

In an electric power steering apparatus shown in FIG. 1, on the output shaft 60 side of a steering column 50, a gear box including a speed reduction gear 20 accommodated in a housing 120 as shown in FIGS. 2 and 3 is mounted.

Whereas, the steering column 50 is hollow, and a steering shaft 70 is inserted thereto, and rotatably supported therein by rolling bearings 90 and 91 accommodated in the housing 120. Whereas, the steering shaft 70 is a hollow shaft, and accommodates a torsion bar 80. Thus, on the outer peripheral surface of the steering shaft 70, a worm wheel 11 is disposed. A worm 12 is engaged with the worm wheel 11. Further, to the speed reduction gear 20 including the worm wheel 11 and the worm 12, an electric motor 100 is connected as shown in FIG. 2.

The speed reduction gear 20 includes, as shown in FIG. 3, a worm wheel 11 including a resin portion 3 made of a polyamide resin composition, and having gear teeth 10 formed on its outer peripheral surface, integrally formed around the outer periphery of a core tube 1 made of metal, and the worm 12 made of metal. Incidentally, in the worm wheel 11, the core tube 1 made of metal and the resin portion 3 may be bonded by an adhesive 8. As the adhesive 8, for example, a silane type coupling agent, a titanate type coupling agent, or a triazine thiol compound may be used.

As the polyamide resin forming the resin portion 3, mention maybe preferably made of, from the viewpoints of the water absorption and the fatigue resistance, polyamide 6, polyamide 66, polyamide 46, polyamide 610, polyamide 612, polyamide 12, polyamide 11, polyamide MXD6, polyamide 616T, modified polyamide 6T, or the like. Out of these, polyamide 6, polyamide 66, or polyamide 46 is excellent in fatigue resistance, and preferred. Further, these polyamide resins may be mixed with other resins having compatibility with a polyamide resin. For example, mention may be made of polyolefin modified with an acid such as maleic anhydride (e.g., polyethylene, polypropylene, ethylene-α-olefin copolymer, or propylene-α-olefin copolymer).

Alternatively, a MC nylon rich in flexibility, and capable of relaxing the stress of the contact surface by deformation is also preferably used for the intended purpose of the present invention.

These polyamide resins, or mixed resins of polyamide resins and other resins show a given or higher durability even when the resins are used alone. They each advantageously act on the wear of the worm 12 made of metal which is a counter material of the worm wheel 11, and sufficiently functions as the speed reduction gear. However, when used under more severe working conditions, the gear teeth 10 may be conceivably broken or worn. Therefore, a reinforcing material is preferably added thereto in order to more enhance the reliability.

The reinforcing material is preferably a glass fiber, a carbon fiber, a potassium titanate whisker; an aluminum borate whisker, or the like. In view of the adhesion with the foregoing polyamide resins, the ones surface-treated with a silane coupling agent are further preferred. Further, these reinforcing materials may be used in combination of a plurality thereof. In view of the impact strength, a fibrous material such as a glass fiber or a carbon fiber is preferably added. Further, in view of the damage of the worm 12, a whisker-like material and a fibrous material are preferably combined to be added. The mixing ratio when the materials are used in combination varies according to the kinds of the fibrous material and the whisker-like material, and it is appropriately selected in view of the impact strength, and the damage of the worm 12, and the like. These reinforcing materials are preferably added in a proportion of 5 to 40 mass% and particularly 10 to 30 mass% based on the total amount. When the amount of the reinforcing material added is less than 5 mass%, the mechanical strength is unpreferably less improved. When the amount of the reinforcing material added exceeds 40 mass%, the worm 12 becomes more likely to be damaged, and the wear of the worm 12 is promoted, which may unfavorably result in insufficient durability as the speed reduction gear.

Further, to the polyamide resin composition, an iodide type heat stabilizer or an amine type antioxidant maybe added each alone, or in combination in order to prevent the deterioration due to heat during forming or during use.

The worm 12 is made of metal such as a S45C material or a SUJ2 material. When a filler such as a glass fiber is applied to the resin portion 3 of the worm wheel 11, a high wear-resisting performance is required. Therefore, a heat treatment, a nitriding treatment, or the like is desirably performed to raise the surface hardness. In the invention, a palsonite treatment is recommended.

There is a close relationship between the surface roughness of the worm tooth surface and the power transfer efficiency of the resin gear mechanism unit. When the surface roughness is large, jamming occurs at the slide portion by the unevenness, resulting in a reduction of the power transfer efficiency. Therefore, the smaller the surface roughness of the worm tooth surface is, the more preferable it is. However, when the roughness is too small, it becomes impossible for the grease composition to lie in minute pit portions of the tooth surface. This results in insufficient lubrication, which shortens the fatigue life of the apparatus. Under such circumstances, in the invention, the surface roughness of the worm tooth surface is set at preferably 0.008 to 0.15 µm, and more preferably 0.01 to 0.12 µm in terms of the arithmetic average roughness (Ra). The optimum range is 0.02 to 0.12 µm in terms of (Ra).

Incidentally, as the speed reduction gear 20, other than the foregoing worm wheel 11 and the worm 12, the spur gear shown in FIG. 4, the helical gear shown in FIG. 5, the bevel gear shown in FIG. 6, the hypoid gear shown in FIG. 7, or the like is applicable. Any of them is configured such that the worm wheel 11 includes a resin portion 3 made of a polyamide resin composition, and having gear teeth 10 formed on its outer peripheral surface, integrally formed around the outer periphery of a core tube 1 made of metal by the use of an adhesive 8, or the like.

Thus, in the space between a pair of the rolling bearings 110 in the housing 120 of the electric power steering apparatus schematically configured as described above, the grease composition for resin lubrication of the invention is filled for the lubrication between both the gear teeth of the worm 12 and the worm wheel 11 (see, FIG. 2).

### (Telescopic shaft for vehicle steering)

FIG. 8 shows a steering mechanism unit of a general automobile. a and b in the diagram are each a telescopic shaft. The telescopic shaft a is configured such that a male shaft and a female shaft are spline-fitted. Such a telescopic shaft a is required to have a performance of absorbing the axial displacement generated upon running of the automobile, and preventing the displacement and the vibration from being transferred onto the steering wheel. Such a performance is generally required for the configuration in which the car body has a sub frame structure, and a site c fixing the upper part of the steering mechanism and a frame e fixing a steering rack d thereon are separate bodies, between which fastening and fixing are achieved via an elastic body f such as rubber. Alternatively, as another case, the expansion function may be required for a worker to once shorten the telescopic shaft, and then to fit and fasten it to the pinion shaft h when a steering shaft joint g is fastened to a pinion shaft h. Further, the telescopic shaft b situated at the upper part of the steering mechanism is also configured such that the male shaft and the female shaft are spline-fitted. Such a telescopic shaft b is required to have a function of moving the position of a steering wheel i axially, and adjusting the position in order to obtain the optimum position for a driver to drive a car. For this reason, it is required to have a function to axially expand and shrink. In all of the foregoing cases, the telescopic shaft is required to reduce the raffling noise of the spline portion, to reduce the raffling noise on the steering wheel, and to reduce the sliding resistance for the axial sliding movement.

Whereas, as shown in FIGS. 9 and 10, the telescopic shaft for vehicle steering includes a male spline shaft 201 and a female spline shaft 202 which are mutually spline-fitted. On the spline portion surface of the male spline shaft 201 and the spline portion surface of the female spline shaft 202, resin films 203a and 203b of PTFE (polytetrafluoroethylene), nylon, or the like are formed, respectively. It does not matter that the resin film may be applied only to either one of the spline portion surface of the male spline shaft 201 and the female spline shaft 202. The resin films 203a and 203b are appropriately set in the range of, for example, 10 to 200 µm.

In the invention, the grease composition for resin lubrication is filled between the male spline shaft 201 and the female spline shaft 202, so that lubrication is achieved.

### <Examples>

Below, the invention will be further described by way of Examples and Comparative Examples. However, the invention is by no way limited thereto.

### (Examples 1 to 19, and Comparative Examples 1 to 4)

Test greases were prepared with the formulations shown in Tables 1 to 3. Incidentally, to every test grease, a Ca sulfonate type rust inhibitor in an amount of 0. 5 mass% and an amine type antioxidant in an amount of 1 mass% were added based on the total amount of the test grease. Whereas, a commercially available grease for power steering was prepared for comparison (Comparative Example 4). Then, each test grease was subjected to the following: 1) evaluation of transfer efficiency, and (2) evaluation of durability.

### (1) Evaluation of transfer efficiency

The coefficient of friction was evaluated by means of a reciprocating kinetic friction wear test machine shown in FIG. 8. The test machine shown is configured in the following manner. A test plate 30 is fixed on a test bed 20, and a test ball 35 is allowed to reciprocate horizontally with the test plate 30 by a cam 50 with a vertical load applied thereon. Thus, the coefficient of friction is measured by a load cell 45. Further, the test bed 20 includes a heater 40, and a thermocouple 41, and keeps the temperature of the test plate 30 constant. The test was carried out in the following manner. The test grease was coated on the test plate 30, and the test ball 35 was allowed to reciprocate under the following conditions. When the value indicated by the load cell 45 had become stable, the value was taken as the coefficient of friction. The results are shown in terms of the relative values with the coefficient of friction of Comparative Example 1 taken as 1 in Tables 1 to 3.

### (Test conditions)

· Plate: SUJ2 (bearing steel)
· Cylinder: PA66GF30 (to polyamide 66, glass fiber has been added in an amount of 30 %)
· Test temperature: 60 °C
. Load: 58.8 N
· Reciprocation distance: 8 mm
· Frequency: 0.25 Hz, 30.0 Hz

### (2) Durability evaluation

Prior to the durability evaluation, a worm wheel test body was fabricated. Namely, a core tube made of S45C, and with an outer diameter of 45 mm and a width of 13 mm, which had been subjected to cross knurl processing, anddegreasedwas placed in a mold equipped with a sprue and a disk gate. Thus, Polyamide 66 containing a glass fiber in an amount of 30 mass% (" UBE nylon 2020 GU6" containing a copper type additive, manufactured by UBE Industries, Ltd.) was injection molded, resulting in a worm wheel blank material with an outer diameter of 60 mm and a width of 13 mm. Then, the outer periphery of the resin portion was subjected to cutting processing to form gear teeth. As a result, a worm wheel test body in the form shown in FIG. 3 was fabricated.

The fabricated worm wheel test body was incorporated into the speed reduction gear of an actual electric power steering apparatus. Further, the test grease was coated onto the gear teeth surface of the worm wheel and the gear teeth surface of the worm all over. With the atmospheric temperature kept at 80°C, steering was carried out, and the amount of wear of the gear teeth was measured every 10,000 times. After steering 100,000 times, the one with a wear amount of 40 µm or less as compared with prior to the test was rated as acceptable. The results are shown in Tables 1 to 3.

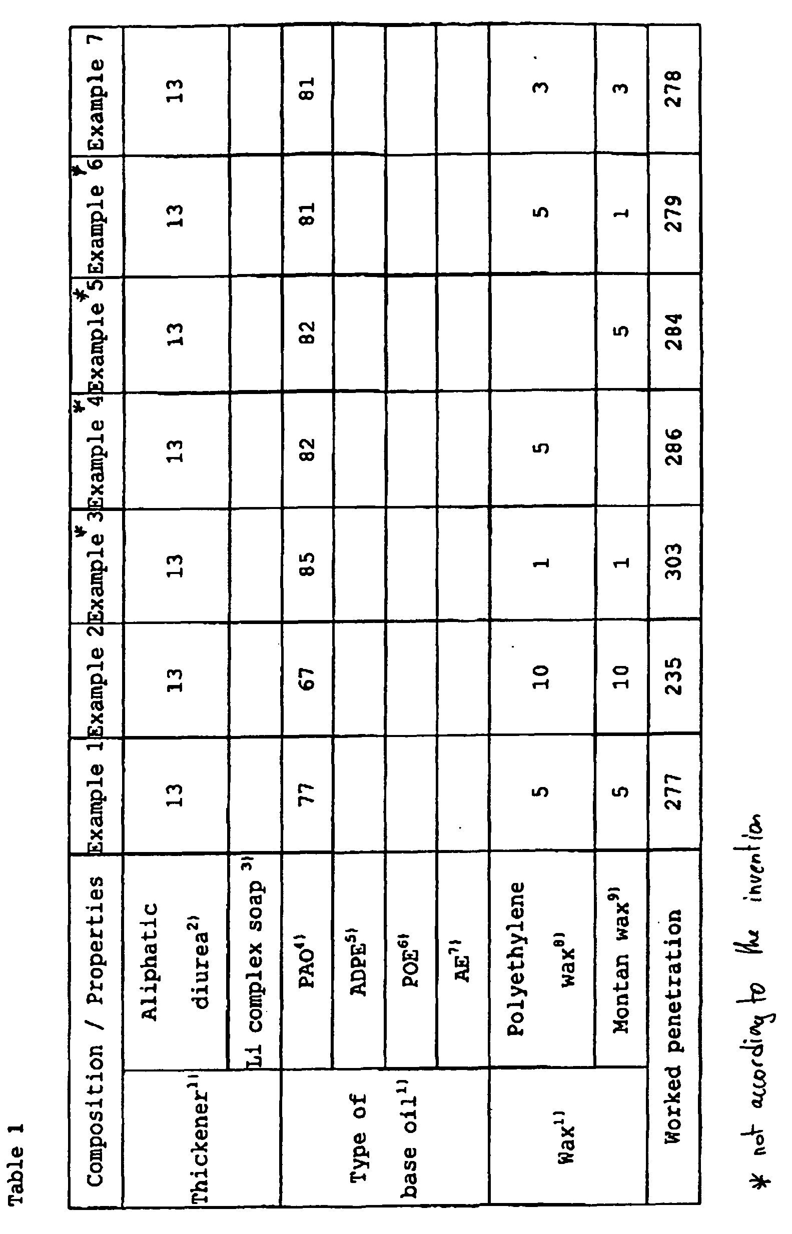

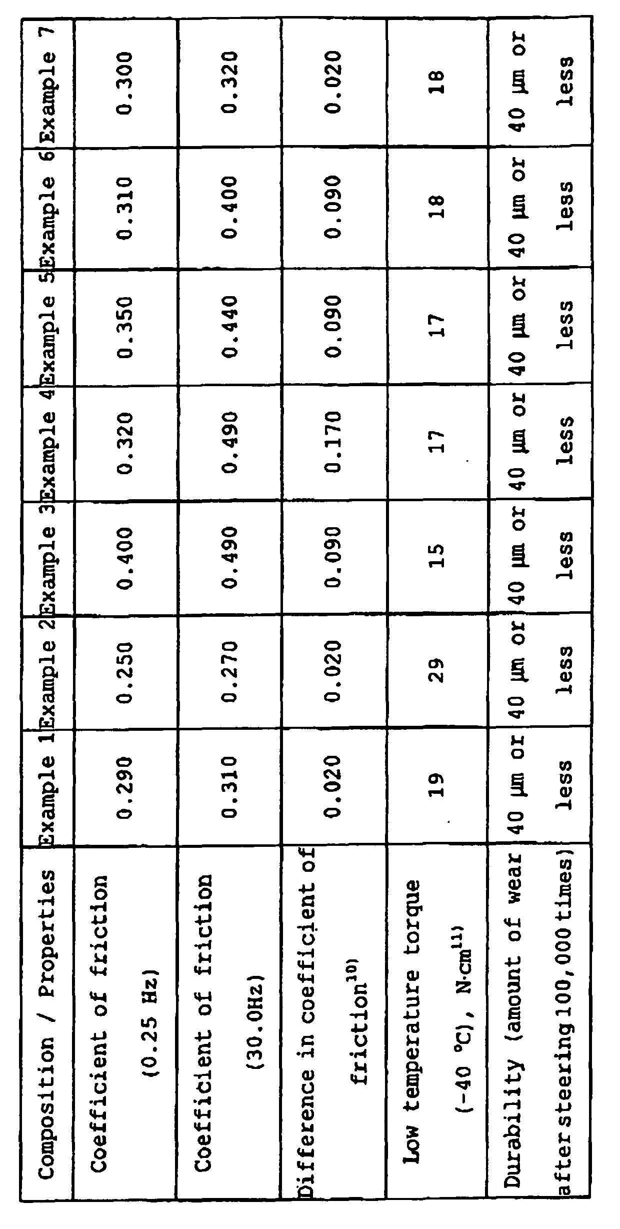

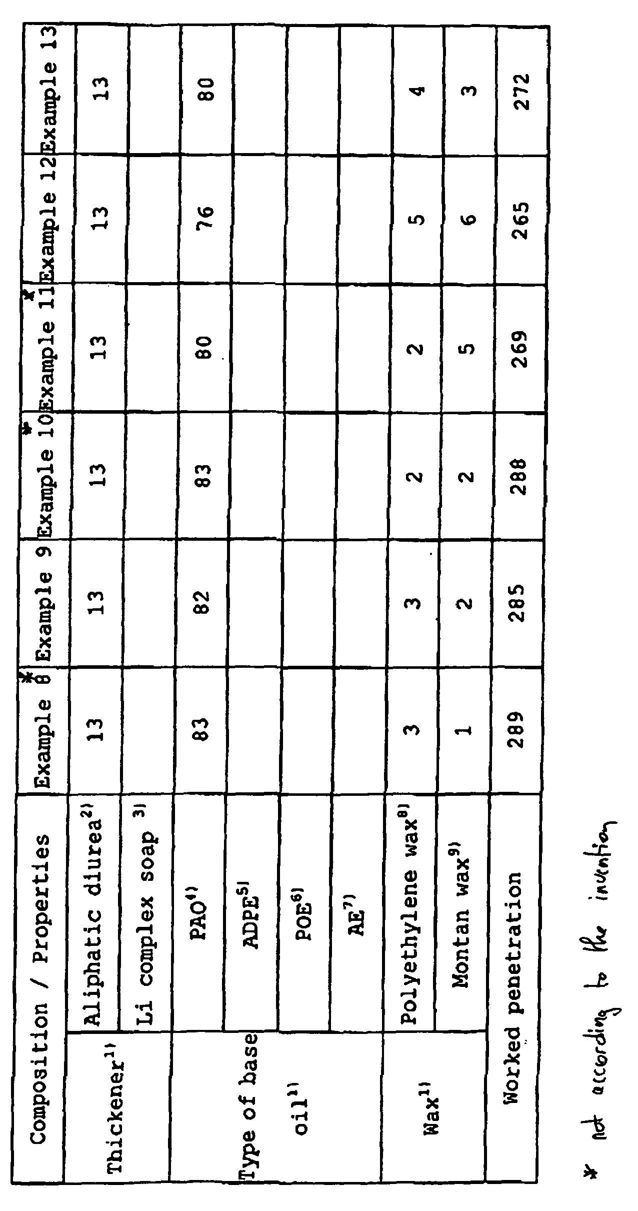

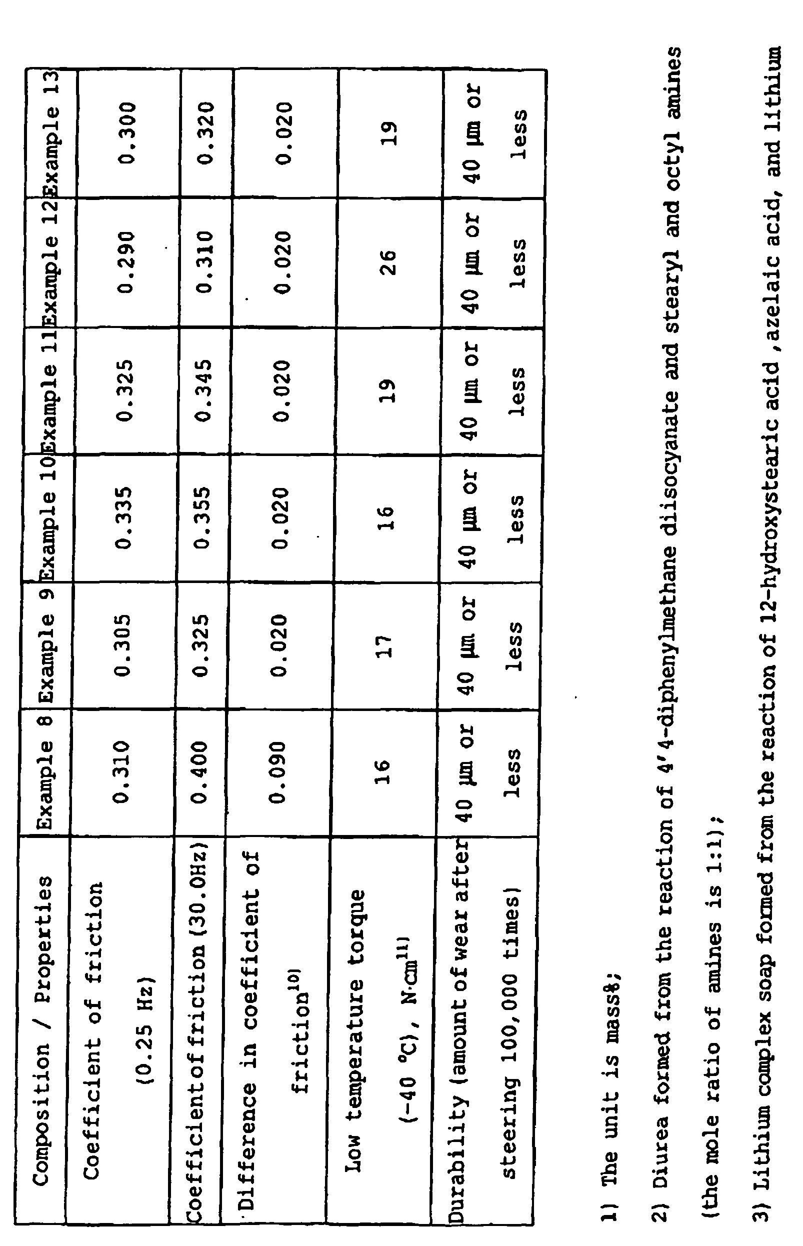

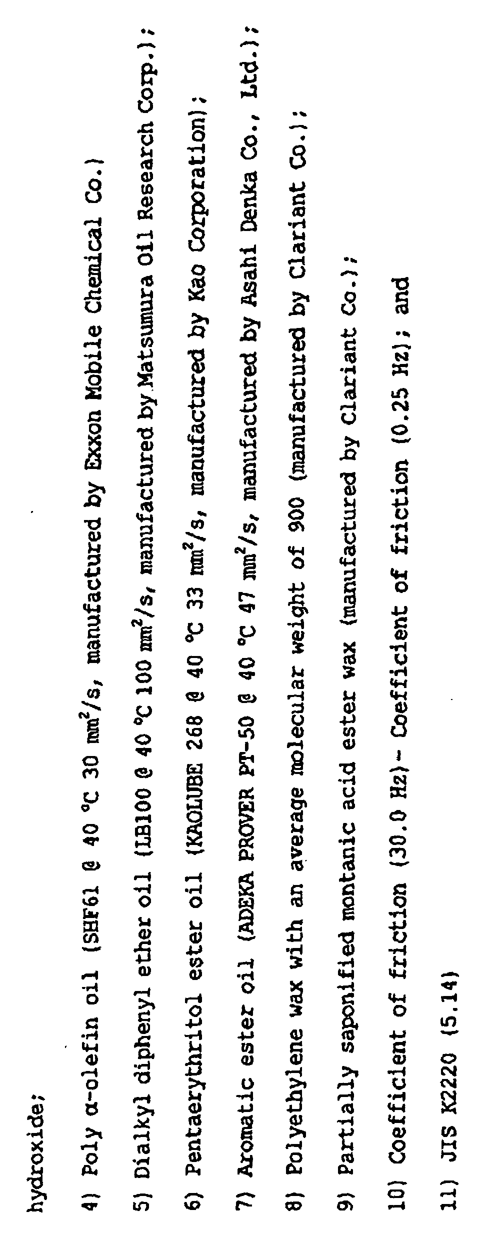

**Table 2 * not according to the invention**

| Composition / Properties | | Example 14 | Example 15 | Example 16 | Example 17 | Example 18 | Example 19 * |
|---|---|---|---|---|---|---|---|
| Thickener¹⁾ | Aliphatic diurea²⁾ | 13 | 13 | 13 | | | |
| | Li complex soap ³⁾ | | | | 20 | 20 | 20 |
| Type of base oil¹⁾ | PAO⁴⁾ | | 70 | 70 | 70 | 60 | 78 |
| | ADPE⁵⁾ | 77 | | | | | |
| | POE⁶⁾ | | 7 | | | | |
| | AE⁷⁾ | | | 7 | | | |
| Wax¹⁾ | Polyethylene wax⁸⁾ | 5 | 5 | 5 | 5 | 10 | 1 |
| | Montan wax⁹⁾ | 5 | 5 | 5 | 5 | 10 | 1 |
| Worked penetration | | 282 | 281 | 278 | 277 | 231 | 290 |
| Coefficient of friction (0.25 Hz) | | 0.290 | 0.300 | 0,320 | 0.300 | 0.270 | 0.410 |
| Coefficient of friction (30.0Hz) | | 0.310 | 0.320 | 0.340 | 0.320 | 0.290 | 0.500 |
| Difference in coefficient of friction¹⁰⁾ | | 0.020 | 0.020 | 0.020 | 0.020 | 0.020 | 0.090 |
| Low temperature torque (-40 °C), N·cm¹¹⁾ | | 19 | 19 | 19 | 18 | 28 | 15 |
| Durability (amount of wear after steering 100,000 times) | | 40 µm or less | 40 µm or less | 40 µm or less | 40 µm or less | 40 µm or less | 40 µm or less |

| | | | | | | | |
|---|---|---|---|---|---|---|---|
| * not according to the invention 1) The unit is mass%; 2) Diurea formed from the reaction of 4'4-diphenylmethane diisocyanate and stearyl and octyl amines (the mole ratio of amines is 1:1); 3) Lithium complex soap formed from the reaction of 12-hydroxystearic acid ,azelaic acid, and lithium hydroxide; 4) Poly α-olefin oil (SHF61 @ 40 °C 30 mm²/s, manufactured by Exxon Mobile Chemical Co.) 5) Dialkyl diphenyl ether oil (LB100 @ 40 °C 100 mm²/s, manufactured by Matsumura Oil Research Corp.); 6) Pentaerythritol ester oil (KAOLUBE 268 @ 40 °C 33 mm²/s, manufactured by Kao Corporation); 7) Aromatic ester oil (ADEKA PROVER PT-50 @ 40 °C 47 mm²/s, manufactured by Asahi Denka Co., Ltd.); 8) Polyethylene wax with an average molecular weight of 900 (manufactured by Clariant Co.); 9) Partially saponified montanic acid ester wax (manufactured by Clariant Co.); 10) Coefficient of friction (30.0 Hz)- Coefficient of friction (0.25 Hz); and 11) JIS K2220 (5.14) | | | | | | | |

**Table 3**

| Composition / Properties | | Comparative Example 1 | Comparative Example 2 | Example 20 | Comparative Example 4 |
|---|---|---|---|---|---|
| Thickener¹⁾ | Aliphatic diurea²⁾ | 13 | 13 | 41 | |
| | Li complex soap 31 | | | | |
| Type of base oil¹⁾ | PAO⁴⁾ | 87 | 45 | 49 | |
| | ADPE⁵⁾ | | | | |
| | POE⁶⁾ | | | | |
| | AE⁷⁾ | | | | |
| Wax¹⁾ | Polyethylene wax⁸⁾ | | 21 | 5 | |
| | Montan wax⁹⁾ | | 21 | 5 | |
| Worked penetration | | 285 | 198 | 210 | |
| Coefficient of friction (0.25 Hz) | | 1.000 | 0.530 | 0.480 | 0.330 |
| Coefficient of friction (30.0 Hz) | | 1.350 | 0.620 | 0.544 | 0.490 |
| Difference in coefficient of friction¹⁰⁾ | | 0.350 | 0.090 | 0.064 | 0.160 |
| low temperature torque (-40 °C), N·cm¹¹⁾ | | 15 | 32 | 34 | 20 |
| Durability (amount of wear after steering 100,000 times) | | 40 µm or more | 40 µm or more | 40 µm or more | 40 µm or more |

| | | | | | |
|---|---|---|---|---|---|
| 1) The unit is mass%; 2) Diurea formed from the reaction of 4'4-diphenylmethane diisocyanate and stearyl and octyl amines (the mole ratio of amines is 1:1); 3) Lithium complex soap formed from the reaction of 12-hydroxystearic acid, azelaic acid, and lithium hydroxide; 4) Poly α-olefin oil (SHF61 @ 40 °C 30 mm²/s, manufactured by Exxon Mobile Chemical Co.) 5) Dialkyl diphenyl ether oil (LB100 @ 40 °C 100 mm²/s, manufactured by Matsumura Oil Research Corp.); 6) Pentaerythritol ester oil (KAOLUBE 268 @ 40 °C 33 mm²/s, manufactured by Kao Corporation); 7) Aromatic ester oil (ADEKA PROVER PT-50 @ 40 °C 47 mm²/s, manufactured by Asahi Denka Co., Ltd.); 8) Polyethylene wax with an average molecular weight of 900 (manufactured by Clariant Co.); 9) Partially saponified montanic acid ester wax (manufactured by Clariant Co.); 10) Coefficient of friction (30.0 Hz)- Coefficient of friction (0.25 Hz); and 11) JIS K2220 (5.14) | | | | | |

As shown in Tables 1 to 3, it is indicated that all of the test greases of Examples containing a nonpolar wax and a polar wax are good in coefficient of friction, excellent in transfer efficiency, and further also small in wear amount and also excellent in durability as compared with the test greases of Comparative Examples. Whereas, the commercially available grease for power steering of Comparative Example 4 shows excellent transfer efficiency, but is not sufficient in durability.

Even when a polyethylene wax or a montan wax is utilized individually, it is possible to impart performances equal to or higher than those with commercially available greases. However, the present inventors found that simultaneous mixing of both can implement a grease having both the advantages thereof. Whether the wax is a polyethylene wax or a montan wax, the fact remains that it can impart both of the wear resistance and the low friction performance to the grease.

However, when they are individually compared, a polyethylene wax is more excellent in low friction performance. This is for the following reason: as compared with the wax having a polar group such as a montanic acid wax, a polyethylene wax is nonpolar and low in surface energy, and can be deformed or sheared by a lower stress. On the other hand, a montan wax has a characteristic capable of strongly adsorbing on the metal surface derived from the polar group in the molecule.

When only a polyethylene wax is added to a grease (Example 4), low friction is exhibited under a low sliding speed condition, but the coefficient of friction increases under a high sliding speed condition. This is conceivably due to the following fact: there is no strong interaction at all between the polyethylene wax and the metal surface or the resin surface, and the low friction performance becomes less likely to be exhibited with an increase in speed. On the other hand, although the grease in which only a montan wax has been formulated is inferior to a polyethylene wax, it exhibits low friction with the same mechanism as that of a polyethylene wax, and loses its effects under a high speed condition. However, a montan wax has a polar group in the molecule, and adsorbs on the metal surface and the resin surface. Therefore, it exerts a certain degree of effects even under a high speed condition, and shows a small range of increase in coefficient of friction.

When both are used in combination, the following phenomenon occurs. Namely, the montan wax adsorbs on the metal surface and the amide of a polyamide resin by the polar group, and forms a surface film formed of a hydrocarbon chain on the resin surface and the metal surface. As a result, the surface energy of the metal surface and the resin surface reduces, and approaches the surface energy of polyethylene. Therefore, the compatibility between polyethylene and the sliding member increases, so that the adsorptivity of polyethylene onto the sliding member is improved. As a result, the low friction performance of polyethylene can be exhibited even under the high sliding speed condition.

The comparison between Example 5 and Example 11 indicates as follows: even when the same amount of a montan wax is mixed, a large difference in coefficient of friction is caused by whether polyethylene is used in combination, or not. When polyethylene and a montan wax are used in combination, the reduction of friction at the sliding portion is achieved by the foregoing mechanism, so that heat generation is suppressed. As a result, the adsorption characteristic of a montan wax is fully exerted without being inhibited by heat generation. Such an oil base agent as a montan wax generally loses its absorption characteristic with an increase in working temperature. This is because the adsorption phenomenon is the exothermic reaction.

As described above, when a polyethylene wax and a montan wax are used in combination, the synergistic effects of evolving the mutual characteristics are exerted, so that the intended purpose of the present invention is implemented in an optimum manner. The comparison among Examples 1 to 13 indicates as follows: by allowing a montan wax to be contained in an amount of 2 mass% or more based on the total amount of the grease, it is possible to suppress the difference in coefficient of friction to 0.02, and it is possible to obtain a given friction characteristics regardless of the sliding speed. Even when the amount of a montan wax added is less than 2 mass% based on the total amount of the grease, the grease can be actually used. However, the preferred amount is 2 mass% or more.

Whereas, the reference to Examples 1 to 13 indicates as follows: when a polyethylene wax is in an amount of 3 mass% or more based on the total amount of the grease, the low friction performance thereof can be fully exerted.

In other words, when the composition in which a montan wax is contained in an amount of 2 mass% or more, and a polyethylene wax is contained in an amount of 3 mass% or more based on the total amount of the grease is selected, it is possible to implement a grease composition having a low coefficient of friction (specifically, 0.320 or less under the condition of 0.25 Hz), and showing less variations in coefficient of friction due to the sliding speed. As far as the low friction performance is concerned, a given or more amount of a wax is required to be added. However, when the amount of the wax added is too large, the hardening of the grease is caused particularly under low temperatures, and the reduction of efficiency in the speed reduction gear mechanism unit is caused from the increase in apparent viscosity. The present inventors found that there is a correlation between the starting torque of the low temperature torque test and the resin gear power transfer efficiency upon the start of the apparatus under a low temperqature environment. When the starting torque is 30 N·cm or less in the low temperature torque test, the grease composition can be actually used. When the total amount of the wax is 10 mass% or less based on the total amount of the grease, the low temperature torque is preferably 20 N·cm or less.

FIG. 9 is a graph showing the changes with time in wear amount in Example 1 and Example 17, indicating that based on the comparison between the lithium complex soap and diurea, the latter is more advantageous in terms of the durability.

A grease was formed with the grease composition of Example 1 as it is, except that the ratio of the substituted alkyl groups (R₁ and R₃ of the formula (I)) of the diurea compound serving as a thickener was changed, and the same evaluations of the transfer efficiency and the durability were carried out. Namely, the thickener is diurea formed from the reaction of 4' 4-diphenylmethane diisocyanate, and stearylamine and octylamine, and the mole ratio of stearylamine and octylamine has been variously changed. The base oil is a poly α-olefin oil (SHF61 manufactured by Exxon Mobile Chemical Co.), and a polyethylene wax and a partially saponified montanic acid ester wax have been mixed in an amount of 5 mass%, respectively. The worked penetration was unified to 280. The results are shown in FIG. 13, in which each measured value of other sample greases is shown in terms of the ratio relative to eachmeasured value when stearylamine and octylamine are in equimolar amounts as a reference.

From FIG. 13, it can be judged that both the low friction performance and the wear resistance can be imparted when the mole percentage of octylamine is 20 to 80 mol% based on the total amount of amines to be subjected to urea synthesis. The proportion of octylamine is further preferably 25 to 75 mol%. It can be judged as follows: when the amount of octylamine used is small, the wear amount increases even slightly; this is because diurea having a stearyl group has a poor heat resisting performance as compared with diurea having an octyl group. In general, the diurea as shown in the formula (I) is reduced in heat resisting performance with an increase in carbon chain lengths of the substituted alkyl chains R₁ and R₃. On the other hand, when the amount of octylamine used is large, the coefficient of friction increases a little. This is because the diurea having an octyl group is inferior in low friction performance to the diurea having a stearyl group. The existence ratio of the polar groups such as urea bond per unit area decreases with an increase in carbon chain length of diurea. As a result, the surface tension of diurea reduces, resulting in a low shear material.

The present inventors evaluated the heat resistance (wear resistance) and the low friction performance of a diurea compound when the carbon chain lengths of R₁ and R₃ in the formula (I) have been changed. As a result, they found that the number of carbon atoms resulting in excellent heat resistance is only 8, and that the number of carbon atoms resulting in excellent low friction performance is 12 to 20, and more preferably 12 to 18. The ones with 7 or less carbon atoms are excellent in heat resistance, but inferior in compatibility with the base oil, and difficult to synthesize. When the number of carbon atoms is 21 or more, the thickening property of diurea is low, and it is difficult to obtain a grease with an appropriate hardness.

Therefore, in the present invention, use of diurea using an amine having 8 carbon atoms and an amine having 12 to 20 carbon atoms in combination as a thickener can provide a desirable performance, and it can be said that the existence ratio of the octyl group may be properly 20 to 80 mol%.

Further, there is a close relationbetween the surface roughness of the worm tooth surface and the power transfer efficiency of the resin gear mechanism unit. For verifying this, the following test was carried out.

A core tube made of S45C, and with an outer diameter of 45 mm and a width of 13 mm, which had been subjected to cross knurl processing, and degreased was placed in a mold equipped with a sprue and a disk gate. Thus, Polyamide 66 containing a glass fiber in an amount of 30 mass% was injection molded, resulting in a worm wheel blank material with an outer diameter of 60 mm and a width of 13mm. Then, the outer periphery of the resinportion was subjected to cutting processing to form gear teeth. Thus, a worm wheel test body was fabricated.

The fabricated worm wheel test body was incorporated into the speed reduction gear of an actual electric power steering apparatus. Further, the grease of Example 9 prepared as described above was coated onto the gear teeth surface of the worm wheel and the gear teeth surface of the worm allover. With the atmospheric temperature kept at 80 °C, steering was carried out at a rotation speed of 40 min⁻¹. Thus, what value the output power becomes relative to the input power was checked to determine the efficiency in the speed reduction gear mechanism. Incidentally, thewormisaS45Cmaterial, and has been subjected to a palsonite treatment in order to increase the surface hardness. Whereas, simultaneously, the evaluation of the durability performance was also carried out in the same manner as with the foregoing ones.

The results are shown in FIG. 14. FIG. 14 indicates that the surface roughness of the worm tooth surface capable of optimizing both of the efficiency and the wear resistance is preferably 0.008 to 0.15 µm in terms of the arithmetic average roughness (Ra). It is more preferably 0.01 to 0.12 µm. The optimum range is 0.02 to 0.12 µm in terms of (Ra).

Further, for verifying the dimensional changes of the resin by the base oil when a polar oil has been mixed, the following test was carried out.

Acylindrical platemade of an ethylene acrylic rubber (diameter 10 mm, thickness 5 mm) was prepared. It was immersed in a grease composition in which the thickener was diurea and the base oil was a mixed oil of a polyol ester oil (30 mm²/s @ 40°C) and a poly α-olefin oil (30 mm²/s @ 40°C), and allowed to stand in a 100 °C thermostat for 100 hours. Thereafter, the plate made of an ethylene acrylic rubber was taken out, and measured for the dimensional changes in thickness. FIG. 15 shows how the dimensional change rate of the rubber changes relative to the amount of various polyol ester oils used.

FIG. 15 indicates that, when the proportion of the ester oil in the total amount of the base oil is 30 mass% or less, the dimensional change rate is 0.3 % or less, and almost negligible.

Further, the grease with the composition of Example 9 was changed in only the base oil kinematic viscosity. Thus, the power transfer efficiency in the resin speed reduction gear portion was measured in the same manner as in the test in FIG. 14. However, the atmospheric temperature was set at -40 °C. The results are shown in FIG. 16, characterized in that each result is shown in terms of the ratio relative to the power transfer efficiency when the base oil kinematic viscosity is 13 mm²/s at 40 °C as a reference. The same diagram indicates that, when the base oil kinematic viscosity at 40°C is 15 to 200 mm²/s, the grease composition can be preferably used without any trouble even under a low temperature environment. When the base oil kinematic viscosity is 200 mm²/s or more at 40 °C, the base oil begins to be hardened, causing the power loss. Conversely, when the base oil kinematic viscosity is less than 15 mm²/s at 40 °C, an oil film is not formed sufficiently even under a low temperature environment, resulting in the reductionof the efficiency. Whereas, from FIG. 16, it can be judged that the base oil kinematic viscosity at 40 °C is more preferably 20 to 150 mm²/s, and furthermore preferably 30 to 100 mm²/s. The optimum range is 35 to 65 mm²/s.

Further, for verifying the effects of the rust inhibitor, the following test was carried out.

Greases containing alkenyl succinic acid ester, sorbitan monooleate, barium sulfonate, and calcium sulfonate, which are typical as rust inhibitors, in an amount of 0.5 mass%, respectively, were prepared, so that the immersion test was carried out. The test temperature was 100 °C, and the resin material was an urethane rubber. The resin material was taken out at given time intervals to be measured for the tensile strength. The results are shown in FIG. 17, indicating that a sulfonic acid metal salt type rust inhibitor less affects the resin material than the ester type rust inhibitor such as sorbitanmonooleateoralkenyl succinic acid ester. Particularly preferred is a sulfonic acid calcium salt.

### (Examples 20 to 31, and Comparative Examples 5 and 6)

The coefficient of friction when the spline fitted portion shown FIGS. 9 and 10A and 10B was coated with each grease described in Table 4, and slided was measured. However, resin coating was applied only onto the surface of the female spline shaft shown in 10A, and the type of the resin is nylon. Incidentally, all the greases were controlled so that the worked penetration was 280. The results are shown in Table 4 together, characterized in that each coefficient of friction is shown in terms of the ratio relative to the coefficient of friction of Comparative Example 5 as a reference.

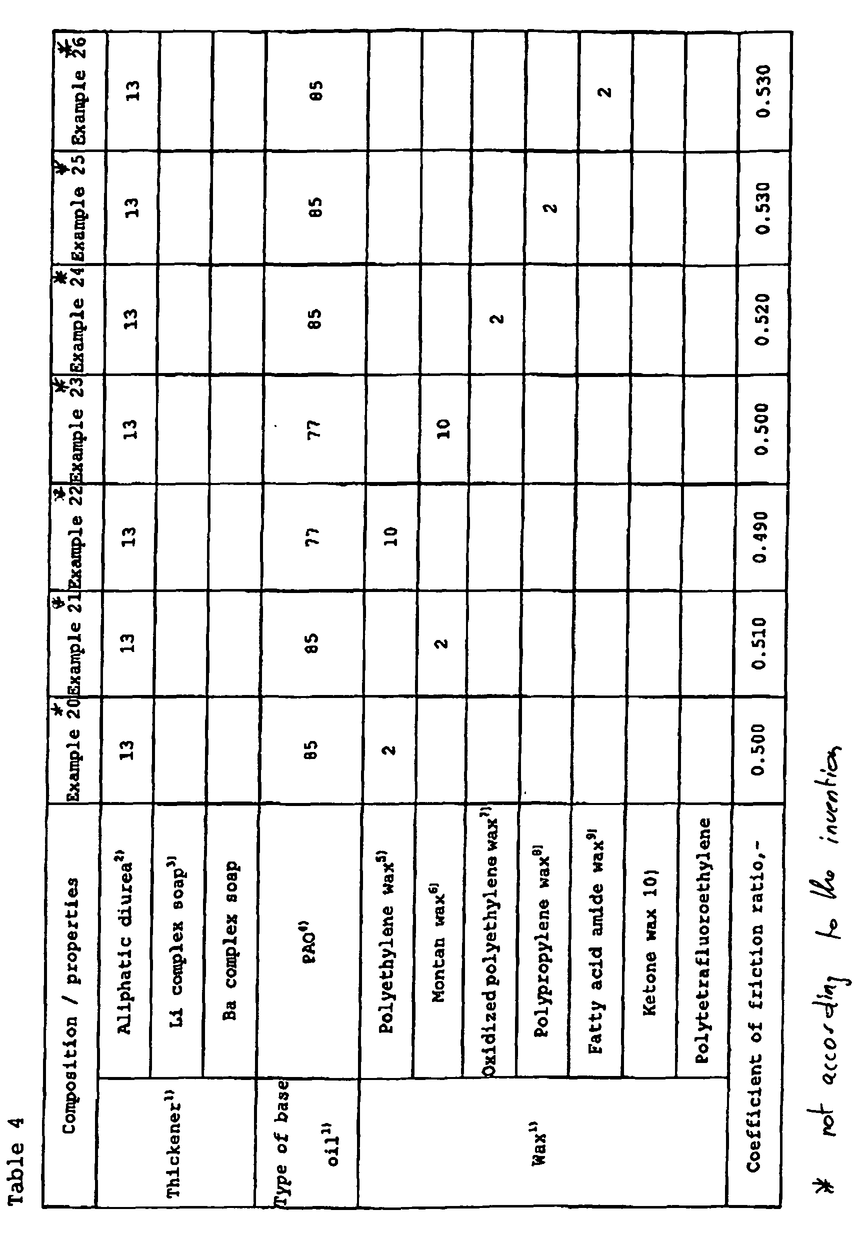

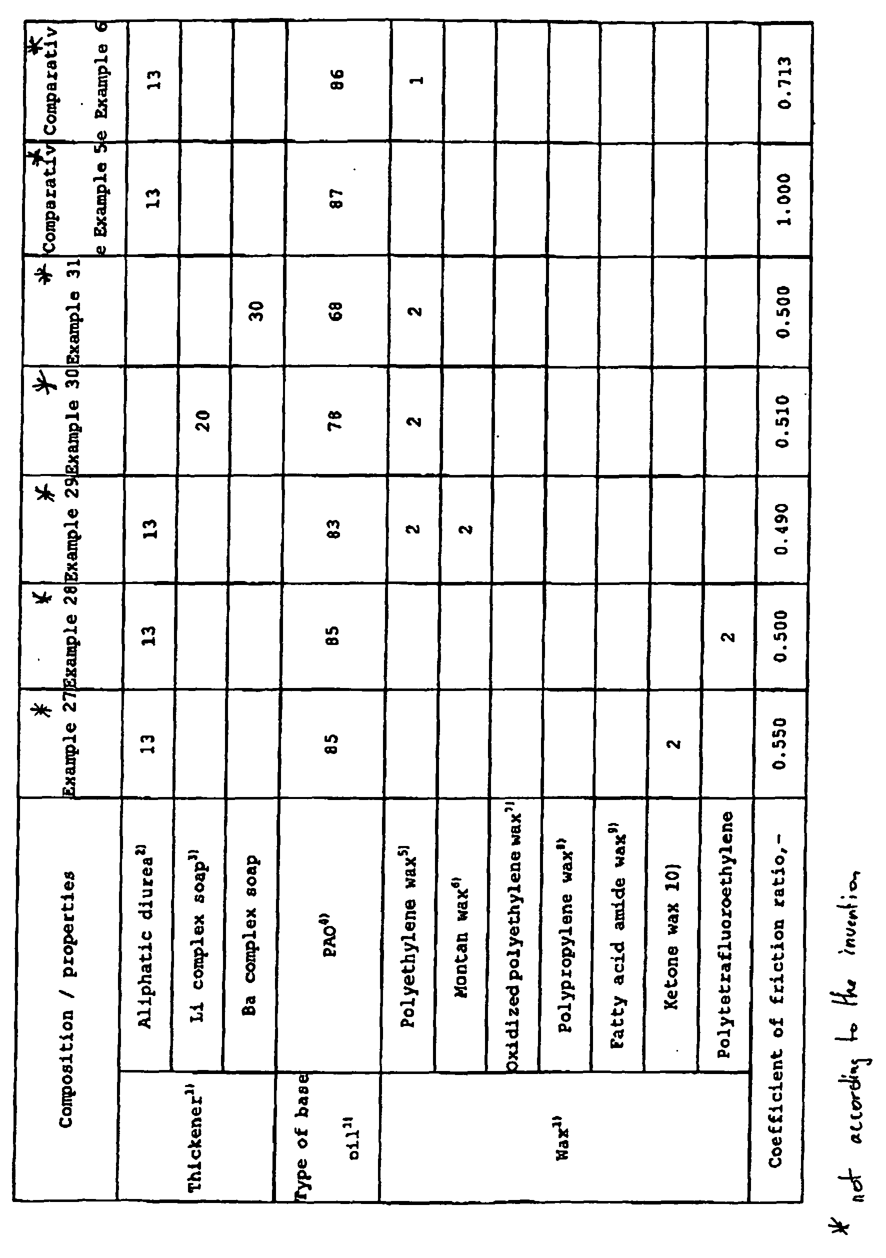

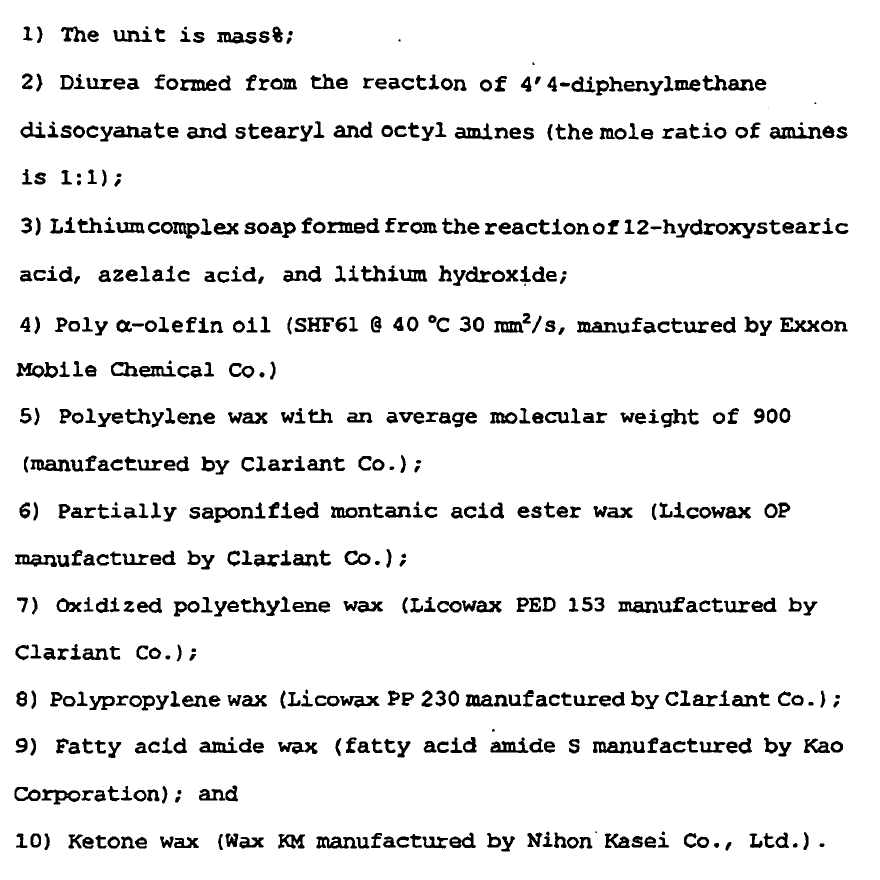

As shown in Table 4, the greases containing the waxes of respective Examples show low friction as compared with the grease not containing the wax of Comparative Example 5.

### <Industrial applicability>

As described above, the grease composition for resin lubrication of the present invention can keep good the sliding lubrication between a resin member and a metal member, and further between a metal member and another metal member over a long time.

Therefore, a telescopic shaft for vehicle steering or an electric power steering apparatus to which the grease composition for resin lubrication of the invention has been applied is excellent in durability, and has a long life.

## Claims

1. A grease composition for resin lubrication comprising a base oil;
a diurea compound or a metallic complex soap;
a polyethylene wax; and
a montan wax, **characterized in that**:
the polyethylene wax is in an amount of 3 mass% or more based on the total amount of the grease;
the montan wax is in an amount of 2 mass% or more based on the total amount of the grease;
the total amount of the montan wax and the polyethylene wax is in an amount of 20 mass% or less based on the total amount of the grease.

2. The grease composition for resin lubrication according to claim 1, **characterized in that** the thickener is a diurea compound represented by following formula (I), and R₁ and R₃ are each n-octylamine or a straight chain aliphatic amine having 12 to 20 carbon atoms, and the mole ratio of n-octylamine and the straight chain aliphatic amine having 12 to 20 carbon atoms is 1 : 4 to 4 :1;
70 mass% or more of the base oil is a poly α-olefin oil, or the base oil is at least one of dialkyl diphenyl ether, an ester type synthetic oil, and a highly refined mineral oil, the base oil kinematic viscosity is 15 to 200 mm²/s at 40°C; and as a rust inhibitor, a sulfonic acid metal salt or a sulfonic acid calcium salt has been added in an amount of 0.3 to 4.0 mass% based on the total amount of the grease

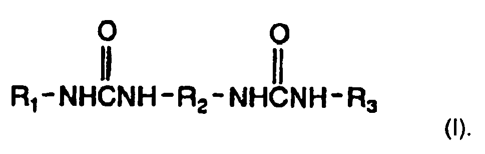

3. An electric power steering apparatus for transferring an auxiliary power by an electric motor to a steering mechanism of a vehicle via a speed reduction gear mechanism,
**characterized in that** a driven gear of the speed reduction gear mechanism includes a resin portion made of a resin composition, and having gear teeth formed on its outer peripheral surface, integrally provided around the outer periphery of a core tube made of metal, and the driving gear is made of metal, and comprising between the driven gear and driving gear the grease composition according to claim 1 or 2.

4. The electric power steering apparatus according to claim 3, **characterized in that** the tooth surface roughness of the driving gear is 0.008 to 0.15 µm in terms of the arithmetic average roughness (Ra); and the driving gear has been subjected to a palsonite treatment.

5. A telescopic shaft for vehicle steering, to be incorporated into a steering shaft of a vehicle, having a male shaft and a female shaft unrotatably and slidably fitted to each other, **characterized in that** a resin film is formed on a fitted portion surface of either one or both of the male shaft and the female shaft and comprising the grease composition according to claim 1 or 2 between the male shaft and the female shaft and the wax mixture has been mixed in the grease composition in an amount of 5 to 10 mass% based on the total amount of the grease.

6. The telescopic shaft for vehicle steering according to claim 5, **characterized in that** a mineral oil or a synthetic hydrocarbon oil is contained in an amount of 70 mass% or more based on the total amount of the base oil as a base oil,
a base oil kinematic viscosity is 15 to 200 mm²/s at 40°C,
a worked penetration is 220 to 340.

## Patentansprüche

1. Schmiermittelzusammensetzung für die Harzschmierung, umfassend ein Basisöl;
eine Diharnstoffverbindung oder eine Metallkomplexseife;
ein Polyethylenwachs; und
ein Montanwachs, **dadurch gekennzeichnet, dass**:
das Polyethylenwachs in einer Menge von 3 Massen-% oder mehr, basierend auf der Gesamtmenge des Schmiermittels, enthalten ist;
das Montanwachs in einer Menge von 2 Massen-% oder mehr, basierend auf der Gesamtmenge des Schmiermittels, enthalten ist;
die Gesamtmenge des Montanwachses und des Polyethylenwaches in einer Menge von 20 Massen-% oder weniger, basierend auf der Gesamtmenge des Schmiermittels, enthalten ist.

2. Schmiermittelzusammensetzung für die Harzschmierung nach Anspruch 1, **dadurch gekennzeichnet, dass** der Verdicker eine Diharnstoffverbindung ist, dargestellt durch die folgende Formel (I), und R₁ und R₃ jeweils n-Octylamin oder ein geradkettiges aliphatisches Amin mit 12 bis 20 Kohlenstoffatomen sind und das Molverhältnis von n-Octylamin und dem geradkettigen aliphatischen Amin mit 12 bis 20 Kohlenstoffatomen 1:4 zu 4:1 ist;
70 Massen-% oder mehr des Basisöls ein Poly-α-Olefinöl ist oder das Basisöl mindestens eines von Dialkyldiphenylether, ein synthetisches Öl vom Estertyp und ein hochraffiniertes Mineralöl ist, die kinematische Viskosität des Basisöls 15 bis 200 mm²/s bei 40 °C ist; und als ein Rostinhibitor ein Sulfonsäuremetallsalz oder ein Sulfonsäurecalciumsalz in einer Menge von 0,3 bis 4,0 Massen-%, basierend auf der Gesamtmenge des Schmiermittels, zugegeben wurde

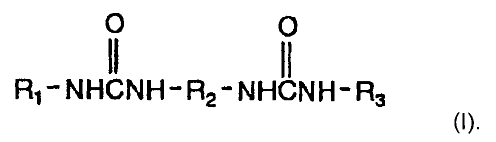

3. Elektrische Servolenkvorrichtung zum Übertragen einer Hilfskraft von einem elektrischen Motor zu einem Lenkmechanismus eines Fahrzeugs durch einen Untersetzungsgetriebemechanismus,
**dadurch gekennzeichnet, dass** ein Abtriebszahnrad des Untersetzungsgetriebemechanismus einen Harzteil aus einer Harzzusammensetzung beinhaltet und eine Getriebeverzahnung an seiner äußeren peripheren Oberfläche gebildet ist, vollständig bereitgestellt um die äußere Peripherie eines Kernrohrs aus Metall, und das Antriebszahnrad aus Metall ist und umfassend die Schmiermittelzusammensetzung nach Anspruch 1 oder 2 zwischen dem Abtriebszahnrad und dem Antriebszahnrad.

4. Elektrische Servolenkvorrichtung nach Anspruch 3, **dadurch gekennzeichnet, dass** die Zahnoberflächenrauhheit des Antriebszahnrad 0,008 bis 0,15 µm in Bezug auf den arithmetischen Mittenrauhwert (Ra) ist; und das Antriebszahnrad einer Palsonite-Behandlung unterzogen wurde.

5. Teleskopwelle zur Fahrzeuglenkung zum Einbauen in einer Lenkwelle eines Fahrzeugs mit einer drehfesten und verschiebbar aneinander angepassten Innenwelle und Außenwelle, **dadurch gekennzeichnet, dass** ein Harzfilm auf einen angepassten Teil der Oberfläche von entweder der Innenwelle oder der Außenwelle oder beiden gebildet wird, und umfassend eine Schmiermittelzusammensetzung nach Anspruch 1 oder 2 zwischen der Innenwelle und der Außenwelle und das Wachsgemisch in die Schmiermittelzusammensetzung in einer Menge von 5 bis 10 Massen-%, basierend auf der Gesamtmenge des Schmiermittels, gemischt wurde.

6. Teleskopwelle für die Fahrzeuglenkung nach Anspruch 5, **dadurch gekennzeichnet, dass** ein Mineralöl oder ein synthetisches Kohlenwasserstofföl in einer Menge von 70 Massen-% oder mehr, basierend auf der Gesamtmenge des Basisöls, als ein Basisöl enthalten ist,
die kinematische Viskosität des Basisöls 15 bis 200 mm²/s bei 40 °C ist,
die Walkpenetration 220 bis 340 ist.

## Revendications

1. Composition de graisse pour la lubrification de résine comprenant une huile de base ;
un composé diurée ou un savon complexe métallique ;
une cire de polyéthylène ; et
une cire de lignite, **caractérisée en ce que** :
la cire de polyéthylène se situe en une quantité de 3 % en masse ou plus sur la base de la quantité totale de la graisse ;
la cire de lignite se situe en une quantité de 2 % en masse ou plus sur la base de la quantité totale de la graisse ;
la quantité totale de la cire de lignite et de la cire de polyéthylène se situe en une quantité de 20 % en masse ou moins sur la base de la quantité totale de la graisse.

2. Composition de graisse pour la lubrification de résine selon la revendication 1, **caractérisée en ce que** l'épaississant est un composé diurée représenté par la formule suivante (I), et R₁ et R₃ sont chacun la *n-*octylamine ou une amine aliphatique à chaîne linéaire ayant 12 à 20 atomes de carbone, et le rapport en mole de la *n*-octylamine et de l'amine aliphatique à chaîne linéaire ayant 12 à 20 atomes de carbone est de 1:4 à 4:1 ;
70 % en masse ou plus de l'huile de base est une huile de poly(α-oléfine), ou l'huile de base est au moins l'un parmi l'éther de dialkyl diphényle, une huile synthétique de type ester, et une huile minérale fortement raffinée, la viscosité cinématique de l'huile de base est de 15 à 200 mm²/s à 40°C ; et comme inhibiteur de rouille, un sel métallique d'acide sulfonique ou un sel calcique d'acide sulfonique a été ajouté en une quantité de 0,3 à 4,0 % en masse sur la base de la quantité totale de la graisse

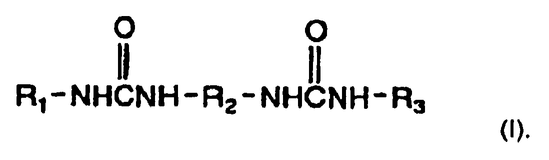

3. Appareil de direction assistée électrique pour transférer une puissance auxiliaire par un moteur électrique à un mécanisme de direction d'un véhicule *via* un mécanisme de réduction de vitesse à engrenages,
**caractérisé en ce que** la roue menée d'un mécanisme de réduction de vitesse à engrenages comprend une partie en résine constituée d'une composition de résine, et ayant une dent d'engrenage formée sur sa surface périphérique externe, prévue intégralement autour de la périphérie externe d'un tube noyau constitué de métal, et la roue menante est constituée de métal, et comprenant entre la roue menée et la roue menante la composition de graisse selon la revendication 1 ou 2.

4. Appareil de direction assistée électrique selon la revendication 3, **caractérisé en ce que** la rugosité de surface des dents de la roue menante est de 0,008 à 0,15 µm en termes de rugosité arithmétique moyenne (Ra) ; et la roue menante a été soumise à un traitement palsonite.

5. Arbre télescopique pour direction de véhicule, à incorporer dans un arbre de direction d'un véhicule, ayant un arbre mâle et un arbre femelle assemblés l'un avec l'autre sans rotation et de manière coulissante, **caractérisé en ce qu'**un film de résine est formé sur une surface de partie ajustée soit de l'un soit des deux parmi l'arbre mâle et l'arbre femelle et comprenant la composition de graisse selon la revendication 1 ou 2 entre l'arbre mâle et l'arbre femelle et le mélange de cire a été mélangé dans la composition de graisse en une quantité de 5 à 10 % en masse sur la base de la quantité totale de la graisse.

6. Arbre télescopique pour direction de véhicule selon la revendication 5, **caractérisé en ce qu'**une huile minérale ou une huile hydrocarbure synthétique est contenue en une quantité de 70 % en masse ou plus sur la base de la quantité totale de l'huile de base comme huile de base,
la viscosité cinématique de l'huile de base est de 15 à 200 mm²/s à 40°C,
la pénétration après malaxage est de 220 à 340.
